# EUROPEAN PATENT SPECIFICATION

(11) **EP 0 315 479 B1**
(45) Date of publication and mention of the grant of the patent: **07.04.1993**
(21) Application number: 88310413.5
(22) Date of filing: 04.11.1988
(51) Int. Cl.: C08G 73/10, C08J 5/04

(54) **Process for preparing polyimide and composite material thereof**
Verfahren zur Herstellung von Polyimid und Verbundmaterial daraus
Procédé pour préparer un polyimide et matériau composite de celui-ci

(30) Priority: 05.11.1987 JP 278193/87; 07.11.1987 JP 280310/87; 16.11.1987 JP 287552/87; 25.11.1987 JP 295315/87
(43) Date of publication of application: 10.05.1989
(73) Proprietor: MITSUI TOATSU CHEMICALS, Inc., Chiyoda-Ku Tokyo 100 (JP)
(72) Inventor: Ohta, Masahiro, Yokohama-shi Kanagawa-ken (JP); Tamai, Shoji, Yokohama-shi Kanagawa-ken (JP); Kawashima, Saburo, Yokosuka-shi Kanagawa-ken (JP); Oikawa, Hideaki, Yokohama-shi Kanagawa-ken (JP); Yamaguchi, Akihiro, Kamakura-shi Kanagawa-ken (JP); Nakakura, Toshiyuki, Yokohama-shi Kanagawa-ken (JP); Masuda, Misao, Fujisawa-shi Kanagawa-ken (JP); Maruko, Chiaki, Kamakura-shi Kanagawa-ken (JP); Koba, Tomohito, Yokohama-shi Kanagawa-ken (JP); Sakai, Hideo, Ebina-shi Kanagawa-ken (JP); Kishi, Satoru, Yokosuka-shi Kanagawa-ken (JP)
(74) Representative: Hayward, Denis Edward Peter

(56) References cited:
- EP-A- 0 071 749
- EP-A- 0 235 294
- EP-A- 0 249 881
- WO-A-84/04313

## Description

The present invention relates to polyimide for fusion molding and more particularly relates to a method for the preparation of polyimide having excellent thermal stability and processability in the molten state.

An embodiment of the present invention relates to a polyimide composite material having excellent high-temperature stability, chemical resistance and mechanical strength as well as outstanding processability.

Polyimide obtained by reacting tetracarboxylic dianhydride and aromatic diamine is excellent in mechanical strength and dimensional stability, and in addition has high temperature stability, flame resistance and electrical insulation properties. Therefore polyimide has been used in the field of electrical and electronic appliances, in space and aeronautical instruments and in transport machinery. In the future it is expected to be put to a wide use in applications where high-temperature resistance is required.

A variety of polyimides exhibiting excellent properties has so far been developed. Some polyimides, however, have no distinct glass transition temperature, although they are excellent in high-temperature stability. As a result, when they are employed for molding materials, specific means such as sinter molding is required for processing. Other polyimides which are excellent in processability have low glass transition temperatures and are soluble in haloganated hydrocarbons, which renders these polyimides unsatisfactory from a high-temperature stability and solvent resistance standpoint. Therefore these polyimides have both advantages and disadvantages.

The present inventors previously found polyimide which was excellent in mechanical strength, thermal characteristics, electrical properties and solvent resistance and also had high-temperature stability. This polyimide consists primarily of recurring units of the formula: 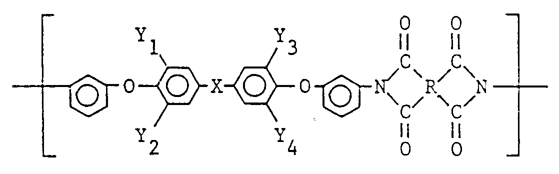
wherein X is a direct bond or a radical selected from a divalent hydrocarbon radical having 1 to 10 carbon atoms, a hexafluorinated isopropylidene radical, a carbonyl radical, a thio radical and a sulfonyl radical; Y₁, Y₂, Y₃ and Y₄ are each independently selected from a hydrogen atom, a lower alkyl radical, a lower alkoxy radical, a chlorine atom and a bromine atom; and R is a tetravalent radical selected from an aliphatic radical having 2 or more carbon atoms, a cyclic aliphatic radical, a monocyclic aromatic radical, a fused polycyclic aromatic radical, and a polycyclic aromatic radical wherein the aromatic radicals are linked to one another directly or via a bridging member. These polyimides have been disclosed in the following Japanese Laid-Open Patents.
- Ohta et al;: TOKKAISHO 61-143478 (1986)
- Tamai et al;: TOKKAISHO 62-68817 (1987)
- Ohta et al;: TOKKAISHO 62-86021 (1987)
- Ohta et al;: TOKKAISHO 62-235381 (1987) and
- Oikawa et al;: TOKKAISHO 63-128025 (1988)
These polyimides are novel high-temperature stable resins having many good properties.

The above mentioned polyimide exhibits excellent flowability and thus has good processability. The fused resin, however, gradually exhibits reduced flowability, which has adverse effects on the processability when the polyimide is kept at high temperatures for a long period of time, for example a long residence at high temperatures in a cylinder used in injection molding.

Therefore, it is strongly desired to develop a polyimide which exhibits good flowability at lower temperatures and furthermore has stable flowability for a long period of time during processing.

Previously known molded products prepared by using composite materials composed of polyimides and fibrous reinforcing materials are excellent in mechanical strengths, particularly in strength retention at high temperatures and also outstanding in solvent resistance and dimensional stability. Therefore these molded products have received attention as structural members for space craft and the like.

Polyimides, however, generally have a high melt viscosity. Therefore composite materials containing these polyimides as matrices have required severe process conditions as compared to those containing matrices of engineering plastics such as polycarbonate and polyethylene terephathalate, thereby causing various problems.

Special polyimides having low melt viscosity and excellent workability have also been known in the art. Such polyimides, however, have low heat distortion temperature and are soluble in solvents such as haloganated hydrocarbons. Consequently, the composites containing such resin as a matrix have caused problems in high-temperature stability and chemical resistance.

In order to overcome these problems, the present inventors have developed a composite material containing a polyimide having above stated good properties and fibrous reinforcing materials [Koba et al; Japanese Laid-Open Patent TOKKAISHO 62-248635 (1987)]. The above mentioned polyimide, however, gradually decreases flowability of the molten state by holding in high temperatures for a long period. Therefore, when composite materials are prepared by using the polyimide and fibrous reinforcing materials, the polyimide exhibits lower melt flowability in the course of time during a continuous operation over a long period. Indeed, the phenomenon has often inhibited such continuous operation. Accordingly, the development of polyimide composite materials which are capable of operating for a long period of time and also provide excellent properties is strongly desired.

An object of this invention is to provide a method for preparing an improved polyimide which, in addition to retaining its other outstanding properties, also has good thermal stability in the molten state so that its processability does not deteriorate even after residence at high temperatures for a long period of time.

Another object of this invention is to provide a polyimide-based composite material capable of being stably processed for a long period of time without adverse effects on the essential properties of the polyimide such as high-temperature stability, chemical resistance and dimensional stability.

The present inventors have carried out an intensive investigation in order to solve above mentioned problems and accomplished this invention.

The present invention is a method for preparing thermally stable polyimide consisting primarily of recurring units of the formula: 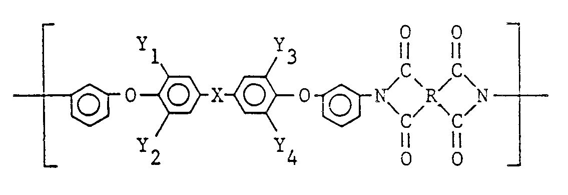
wherein X is a direct bond or a radical selected from a divalent hydrocarbon radical having 1 to 10 carbon atoms, a hexafluorinated isopropylidene radical, a carbonyl radical, a thio radical and a sulfonyl radical; Y₁, Y₂, Y₃ and Y₄ are each independently selected from a hydrogen atom, a lower alkyl radical, a lower alkoxy radical, a chlorine atom and a bromine atom; and R is a tetravalent radical selected from an aliphatic radical having 2 or more carbon atoms, a cyclic aliphatic radical, a monocyclic aromatic radical, a fused polycyclic aromatic radical, and a polycyclic aromatic radical wherein the aromatic radicals are linked to one another directly or via a bridging member, by the reaction of an aromatic diamine with a tetracarboxylic dianhydride and thermally or chemically imidizing the resultant polyamic acid, wherein:
(a) the aromatic diamine is represented by the formula: 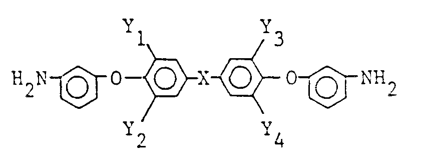 wherein X, Y₁, Y₂, Y₃ and Y₄ are as above defined,
(b) the tetracarboxylic dianhydride is represented by the formula: 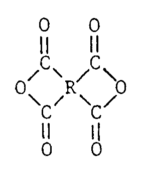 wherein R is as above defined,
(c) the reaction is carried out in the presence of monoamine represented by the formula:

   Z-NH₂

   wherein Z is a monovalent radical selected from an aliphatic radical, a cyclic aliphatic radical, a monocyclic aromatic radical, a fused polycyclic aromatic radical, and a polycyclic aromatic radical wherein the aromatic radicals are linked to one another directly or via a bridging member, and
(d) the amount of the aromatic diamine is from 0.9 to 1.0 mole per mole of the tetracarboxylic dianhydride and the amount of the monoamine is from 0.001 to 1.0 mole per mole of the tetracarboxylic dianhydride.

An embodiment of the present invention is a polyimide composite material comprising a fibrous reinforcing material and a thermally stable polyimide prepared by the aforesaid method.

Suitable aromatic diamines for use in the method of this invention include, for example, bis[4-(3-aminophenoxy)phenyl]methane, 1,1-bis[4-(3-aminophenoxy)phenyl]ethane, 2,2-bis[4-(3-aminophenoxy)phenyl]propane, 2-[4-(3-aminophenoxy)phenyl]-2-[4-(3-aminophenoxy)-3-methylphenyl]propane, 2,2-bis[4-(3-aminophenoxy)-3-methylphenyl]propane, 2-[4-(3-aminophenoxy)phenyl]-2-[4-(3-aminophenoxy)-3,5-dimethylphenyl]propane, 2,2-bis[4-(3-aminophenoxy)-3,5-dimethylphenyl]propane, 2,2-bis[4-(3-aminophenoxy)phenyl]butane, 2,2-bis[4-(3-aminophenoxy)phenyl]-1,1,1,3,3,3-hexafluoropropane, 4,4'-bis(3-aminophenoxy)biphenyl, 4,4'-bis(3-aminophenoxy)-3-methylbiphenyl, 4,4'-bis(3-aminophenoxy)-3,3'-dimethylbiphenyl, 4,4'-bis(3-aminophenoxy)-3,5-dimethylbiphenyl, 4,4'-bis(3-aminophenoxy)-3,3',5,5'-tetramethylbiphenyl, 4,4'-bis(3-aminophenoxy)-3,3'-dichlorobiphenyl, 4,4'-bis(3-aminophenoxy)-3,5-dichlorobiphenyl, 4,4'-bis(3-aminophenoxy)-3,3',5,5'-tetrachlorobiphenyl, 4,4'-bis(3-aminophenoxy)-3,3'-dibromobiphenyl, 4,4'-bis(3-aminophenoxy)-3,5-dibromobiphenyl, 4,4'-bis(3-aminophenoxy)-3,3',5,5'-tetrabromobiphenyl, bis[4-(3-aminophenoxy)phenyl] ketone, bis[4-(3-aminophenoxy)phenyl] sulfide, bis[4-(3-aminophenoxy)-3-methoxyphenyl] sulfide, [4-(3-aminophenoxy)phenyl) [4-(3-aminophenoxy)-3,5-dimethyoxyphenyl] sulfide, bis[4-(3-aminophenoxy)-3,5-dimethoxyphenyl] sulfide and bis[4-3-aminophenoxy)phenyl] sulfone.

Particularly preferred aromatic diamines for use in this invention are 4,4'-bis(3-aminophenoxy)biphenyl, 2,2-bis[4-(3-aminophenoxy)phenyl]propane, bis[4-(3-aminophenoxy)phenyl] ketone, bis(4-(3-aminophenoxy)phenyl] sulfide and bis[4-(3-aminophenoxy)phenyl] sulfone. The diamine may be used singly or in a combination of two or more.

A part of the above mentioned aromatic diamine may be replaced by other diamines known to be useful in the preparation of polyimide so long as no adverse effects on the good properties of the polyimide are caused.

Suitable tetracarboxylic dianhydrides for use in the method of this invention includes, for example, ethylenetetracarboxylic dianhydride, butanetetracarboxylic dianhydride, cyclopentanetetracarboxylic dianhydride, pyromellitic dianhydride, 1,1-bis(2,3-dicarboxyphenyl)ethane dianhydride, bis(2,3-dicarboxyphenyl)methane dianhydride, bis(3,4-dicarboxypenyl)methane dianhydride, 2,2-bis(3,4-dicarboxyphenyl)propane dianhydride, 2,2-bis(2,3-dicarboxyphenyl)propane dianhydride, 2,2-bis(3,4-dicarboxyphenyl)-1,1,1,3,3,3-hexafluoropropane dianhydride, 2,2-bis(2,3-dicarboxyphenyl)-1,1,1,3,3,3-hexafluoropropane dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride, 2,2',3,3'-biphenyltetracarboxylic dianhydride, bis(3,4-dicarboxyphenyl) ether dianhydride, bis(2,3-dicarboxyphenyl) ether dianhydride, bis(3,4-dicarboxyphenyl) sulfone dianhydride, 4,4'-(p'phenylenedioxy)diphthalic dianhydride, 4,4'-(m-phenylenedioxy)diphthalic dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 1,2,3,4-benzenetetracarboxylic dianhydride, 3,4,9,10-perylenetetracarboxylic dianhydride, 2,3,6,7-anthracenetetracarboxylic dianhydride and 1,2,7,8-phenanthrenetetracarboxylic dianhydride.
Particularly preferred tetracarboxylic dianhydride of this invention is pyromellitic dianhydride, 3,3',4,4'-benzophenonetetracarboxylic dianhydride, 3,3',4,4'-biphenyltetracarboxylic dianhydride, bis(3,4-dicarboxyphenyl) ether dianhydride and 4,4'-(p-phenylenedioxy)diphthalic dianhydride. The tetracarboxylic dianhydride may be used singly or in a combination of two or more.

Suitable monoamines for use in the method of this invention include, for example, methylamine, ethylamine, n-propylamine, iso-propylamine, n-butylamine, iso-butylamine, sec-butylamine, tert-butylamine, n-amylamine, iso-amylamine, tert-amylamine, n-hexylamine, heptylamine, n-octylamine, 2-ethylhexylamine, nonylamine, decylamine, vinylamine, allylamine, cyclopropylamine, cyclobutylamine, cyclopentylamine, cyclohexylamine, cycloheptylamine, cyclooctylamine, cyclohexylmethylamine, aniline, o-toluidine, m-toluidine, p-toluidine, 2,3-xylidine, 2,4-xylidine 2,5-xylidine, 2,6-xylidine, 3,4-xylidine, 3,5-xylidine, o-chloroaniline, m-chloroaniline, p-chloroaniline, o-bromoaniline, m-bromoaniline, p-bromoaniline, o-nitroaniline, m-nitroaniline, p-nitroaniline, o-aminophenol, m-aminophenol, p-aminophenol, o-anisidine, m-anisidine, p-anisidine, o-phenetidine, m-phenetidine, p-phenetidine, o-aminobenzaldehyde, m-aminobenzaldehyde, p-aminobenzaldehyde, o-aminobenzotrifluoride, m-aminobenotrifluoride, p-aminobenzotrifluoride, o-aminobenzonitrile, m-aminobenzonitrile, p-aminobenzonitrile, 2-aminobiphenyl, 3-aminobiphenyl, 4-aminobiphenyl, 2-aminophenyl phenyl ether, 3-aminophenyl phenyl ether, 4-aminophenyl phenyl ether, 2-aminobenzophenone, 3-aminobenzophenone, 4-aminobenzopbenone, 2-aminophenyl phenyl sulfide, 3-aminophenyl phenyl sulfide, 4-aminophenyl phenyl sulfide, 2-aminophenyl phenyl sulfone, 3-aminophenyl phenyl sulfone, 4-aminophenyl phenyl sulfone, 1-naphthylamine, 2-naphthylamine, 1-amino-2-naphthol, 2-amino-1-naphthol, 4-amino-1-naphthol, 5-amino-1-naphthol, 5-amino-2-naphthol, 7-amino-2-naphthol, 8-amino-1-naphthol, 8-amino-2-naphthol, 1-aminoanthracene, 2-aminoanthracene and 9-aminoanthracene.

Particularly preferred monoamines for use in this invention include n-propylamine, n-butylamine, n-hexylamine, n-octylamine, cyclohexylamine, aniline, 4-aminobiphenyl, 4-aminophenyl phenyl ether, 4-aminobenzophenone, 4-aminophenyl phenyl sulfide and 4-aminophenyl phenyl sulfone.

The monoamine may be used singly or in a combination of two or more.

The molar ratio of the tetracarboxylic dianhydride, aromatic diamine and monoamine is 0.9 to 1.0 mole of aromatic diamine and 0.001 to 1.0 mole of monoamine, respectively, per mole of tetracarboxylic dianhydride.

In preparing the polyimide, the molar ratio of aromatic diamine to tetracarboxylic dianhydride is usually adjusted in order to control the molecular weight of the polyimide formed. In the method of this invention, the mole ratio of aromatic diamine to tetracarboxylic dianhydride is in the range of 0.9 to 1.0 in order to obtain polyimide having good melt viscosity.

The amount of monoamine present in the reaction is in the range of 0.001 to 1.0 mole per mole of tetracarboxylic dianhydride. When the amount is less than 0.001 mole, heat stability in the molten state of the polyimide, which is the object of this invention, cannot be obtained. On the other hand, an amount exceeding 1.0 mole reduces mechanical properties of molded products. Preferred amount is in the range of 0.01 to 0.5 mole.

Organic solvents are used in the method of this invention. Representative solvents which may be used include, for example, N,N-dimethylformamide, N,N-dimethylacetamide, N,N-diethylacetamide, N,N-dimethylmethoxyacetamide, N-methyl-2-pyrolidone, 1;3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea, hexamethylphosphoramide, phenol, m-cresol, p-cresol, p-chlorophenol and anisole. These organic solvents may be used singly or in a combination of two or more.

In the method of this invention, the starting materials, e.g. the tetracarboxylic dianhydride, aromatic diamine and monoamine are added to the organic solvent and reacted. The reaction can be carried out by any of the following methods.
(a) After reacting tetracarboxylic dianhydride with aromatic diamine, monoamine is added and reacted.
(b) After reacting tetracarboxylic dianhydride with monoamine, aromatic diamine is added and reacted.
(c) Tetracarboxylic dianhydride, aromatic diamine and monoamine are reacted at the same time.

The reaction temperature is in the range of 0 to 250°C and normally 60°C or less.

Any reaction pressure may be used and ambient pressure is enough to carry out the reaction.

The reaction time is dependent upon the tetracarboxylic dianhydride, aromatic diamine, monoamine, solvent and reaction temperature. A reaction time of 4 to 24 hours is normally sufficient.

Polyamic acid is formed by the above mentioned reaction, generally at low temperatures, and can then be thermally or chemically imidized eg by heating at 100 to 400°C or chemically by using a conventional imidizing agent. The polyimide obtained consists primarily of recurring units of the formula: 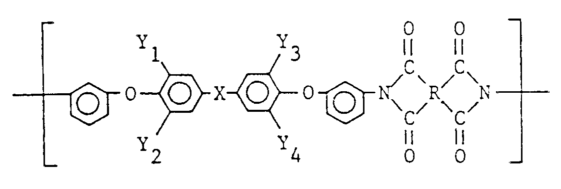
wherein X, Y₁, Y₂, Y₃ Y₄ and R are as above defined.

The polyimide, however, can also be obtained by simultaneously conducting the formation and thermal imidization of the polyamic acid at a temperature of 60° to 250°C. In this method, the tetracarboxylic dianhydride, aromatic diamine and monoamine are suspended or dissolved in the organic solvent and reacted by heating. Thus formation and imidization of the polyamic acid are carried out at the same time to give polyimide consisting primarily of the recurring units of the above formula.

When the polyimide of this invention is processed by fusion molding, other thermoplastic resins may be incorporated in a suitable amount depending upon the application, so long as no adverse effects as regards the object of this invention are encountered. Illustrative examples of thermoplastic resins which may be used include polyethylene, polypropylene, polycarbonate, polyarylate, polyamide, polysulfone, polyethersulfone, polyetherketone, polyphenylenesulfide, polyamideimide, polyetherimide and modified polyphenyleneoxide.

Conventional fillers and additives for resin compositions may be employed in amounts which have no adverse effects on the object of this invention. The fillers and additives which may be used include, for example, wear resistance improvers such as graphite, carborundum, quartz powder, molybdenum disulfide and fluororesins; reinforcing materials such as glass fiber, carbon fiber, boron fiber, silicon carbide fiber, carbon whisker, asbestos, metal fiber and ceramic fiber; flame retardants such as antimony trioxide, magnesium carbonate and calcium carbonate; electrical property improvers such as clay and mica; tracking resistance improvers such as barium sulfate, silica and calcium metasilicate; thermal conductivity improvers such as iron powder, zinc powder, aluminum powder and copper powder; and other miscellaneous additives such as glass beads, glass spheres, talc, diatomaceous earth, alumina, silicate balloon, hydrated alumina, metal oxides and coloring agents.

Fibrous reinforcing materials useful in the polyimide-based composite material of this invention include, for example, glass fibers such as E-glass, S-glass, T-glass, C-glass and AR-glass; carbon fibers such as polyacrylonitrile-based, pitch-based and rayon-based carbon fibers; aromatic polyamide fibers, eg Kevler (Trade mark of E.I. Du Pont de Numeours & Co.); silicon carbide fibers such as Nicalon (Trade mark of Nippon Carbon Co.); metallic fibers such as stainless steel fibers; alumina fibers and boron fibers. These fibers are used as unidirectional long fibers such as yarn, bundled unidirectional long fibers such as roving, tow and multidirectional continuous fibers such as textiles, mats and felts.

These fibrous reinforcing materials can be used singly or in a combination of two or more.

These reinforcing materials should be selected so as to achieve the required properties in the molded articles having regard to the properties of the fibrous materials such as strength, elastic modulus, elongation at break, electrical properties and density. For example, carbon fibers or glass fibers should be selected when high values are required for specific strength and specific modulus of elasticity. Carbon fibers and metal fibers are preferred when a shielding property for electromagnetic field is required. Glass fibers are suitable when electrical insulation properties are required.

Fiber diameter and collected number of fibers tend to depend upon the raw material of the fibers. For example, carbon fibers generally have a fiber diameter of 4 to 8 µm and a collected number of 1,000 to 12,000. Finer diameter of fibers is preferred due to favorable effect on the mechanical properties of the molded articles obtained.

Surface treatment of the fibrous reinforcing materials is favorable for improving affinity with the polyimide. For example, surface treatment with silane base or titanate base coupling agent is particularly preferred for glass fibers.

The amount of these fibrous reinforcing materials is in the range of 5 to 85 %, and preferably in the range of 30 to 70 % by volume of the composite material. When the volume content of the fibrous reinforcing materials is low, a significant reinforcing effect cannot be expected. When the volume content is too high, the interlayer strength of molded articles decreases severely.

Any previously known method can be used for the preparation of the composite material from the polyimide and the fibrous reinforcing material.

For example, in the fused impregnation method, the fibrous reinforcing material is impregnated with the polyimide in a molten state. In the fluidized bed method, impregnation is carried out by using the polyimide powder suspended in the air or in a liquid such as water. In the fluidized bed method, the impregnated fibrous reinforcing material is dried, if necessary, and then the polyimide in the fibrous reinforcing material is fused by heating. This process is particularly effective for providing an integrated polyimide composite material. Finer particle sizes are desired for the polyimide powder in the impregnation step. The preferred particle size is less than the diameter of the monofilaments of the fibers.

In another method, the powder or a film of the polyimide is placed on one or both sides of the fibrous reinforcing material and pressed with heating. When the fibrous reinforcing material is a fabric, the polyimide powder or film is alternately laid up with necessary sheets of the fabric to form the desired thickness of article to be molded and pressed with heating. Thus impregnation and molding can be conducted at the same time and molded articles having a uniform resin dispersion can be obtained.

Further methods for the fused impregnation have been described, for example, in Nakakura et al;. Japanese Laid-Open Patent 61-229534, 61-229536 (1986) and Koba et al; Japanese Patent Application 62-216253 (1987). As an example of these methods, the fibrous reinforcing material is impregnated by bringing it into contact with the molten resin on the surface of a hot roll or hot belt. In the method, a fiber sheet obtained by arranging in parallel unidirectional long fibers such as two which are drawn out of several bobbins, or a multidirectional continuous fiber, is applied by a given tension to the direction of take-up with a tension adjusting roll. On the other hand, the polyimide is fused by heating in an extruder, extruded through a die and applied to the lower belt on the surface of a hot roll maintained at a prescribed temperature. Successively the above mentioned fiber sheet or multidirectional continuous fiber is impregnated by passing through one or more hot rolls in a sandwiched condition between the upper and lower pair of belts. The continuous impregnation method is particularly preferred.

The composite material thus obtained is laid up and pressed with heating to obtain molded articles of desired shapes.

The present invention is illustrated by the examples and comparative examples which follow and in which reference is made to the accompanying drawings, in which:
Figs. 1 and 5 illustrate the relationship between shear rate and melt viscosity of the polyimides of Examples 1 and 5 and Comparative Examples 1 and 5;
Figs. 2 and 6 illustrate the relationship between melt viscosity and number of repeated fusions of the polyimides of Examples 2 and 6 and Comparative Examples 2 and 6;
Figs. 3 and 4 illustrate the relationship between melt viscosity and residence time in a flow tester of the polyimides of Examples 3 and 4 and Comparative Examples 3 and 4; and
Fig. 7 schematically illustrates the equipment used for preparing polyimide-based composite material in Example 7.

### Example 1

To a reaction vessel equipped with a stirrer, reflux condenser and nitrogen inlet tube, 322 g (1.0 mole) of 3,3',4,4'-benzophenonetetracarboxylic dianhydride and 4,050 g of N,N-dimethylacetamide as a solvent were charged. Then 392 g (0.98 mole) of bis[4-(3-aminophenoxy)phenyl] sulfide was added by portions at room temperature in a nitrogen atmosphere so as not to raise the temperature of the solution and stirred for about 20 hours at room temperature.

To the polyamic acid solution thus obtained 8.10 g (0.08 mole) of n-hexylamine was added and further stirred for an hour. Then 202 g (2 moles) of triethylamine and 306 g (3 moles) of acetic anhydride were added dropwise to the solution. The reaction mixture was stirred for 20 hours. The resultant light yellow slurry was filtered, washed with methanol and dried at 180°C for 8 hours under reduced pressure. The light yellow polyimide powder obtained was 661 g. The polyimide powder had a glass transition temperature of 205°C in accordance with DSC method and an inherent viscosity of 0.62 dl/g. The inherent viscosity was measured at 35°C in a solvent mixture (90/10 weight ratio of p-chlorophenol/phenol) at a concentration of 0.5 g/100 ml solvent.

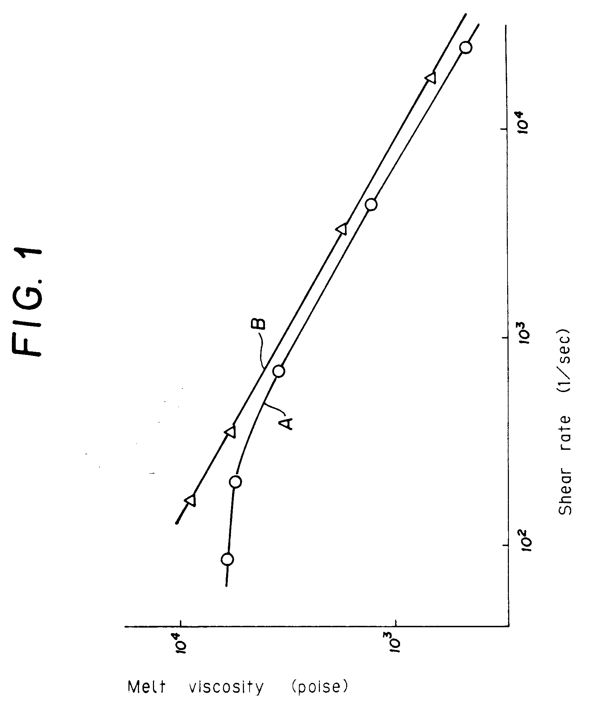

The relationship between the shear rate and the melt viscosity of the polyimide powder thus obtained was measured by using a Japan Polymer Society type flowtester (Trade mark, CFT-500; a product of Shimadzu Seisakusho Co.) with an orifice having diameter of 0.1 cm and a length of 1 cm. After keeping at 320°C for 5 minutes, melt viscosity was measured at various shear rate. The relationship between melt viscosity and shear rate is illustrated by curve A in Figure 1.

It will be seen that the melt viscosity of the polyimide was remarkably lowered when share rate was increased.

### Comparative Example 1

The same procedures as described in Example 1 were carried out without using n-hexylamine. The polyimide powder obtained was 652 g and had an inherent viscosity of 0.62 dl/g. By using the polyimide powder, the relationship between the melt viscosity and the shear rate was measured with the flow tester as in Example 1. The results are illustrated by curve B in Figure 1.

Curve B indicates higher melt viscosities at lower shear rates (around 10² l/sec.) than Curve A, which means there will be difficulty of processing with the polyimide of Comparative Example 1.

### Example 2

To a reaction vessel equipped with a stirrer, reflux condenser and nitrogen inlet tube, 322 g (1.0 mole) of 3,3'-4,4'-benzophenonetetracarboxylic dianhydride and 4,050 g of N,N-dimethylacetamide as a solvent were charged. Then 392 g (0.98 mole) of [4-(3-aminophenoxy)phenyl] sulfide was added by portions at room temperature in a nitrogen atmosphere so as not to raise the temperature of the solution and stirred for about 20 hours at room temperature.

To the polyamic acid solution thus obtained, 7.44 g (0.08 mole) of aniline was added and further stirred for an hour. Then 202 g (2 moles) of triethylamine and 306 g (3 moles) of acetic anhydride were added dropwise to the solution. The reaction mixture was stirred for 20 hours at room temperature. The resultant light yellow slurry was filtered, washed with methanol and dried at 180°C for 8 hours under reduced pressure. The light yellow polyimide powder obtained was 660 g. The polyimide powder had a glass transition temperature of 205°C and an inherent viscosity of 0.62 dl/g.

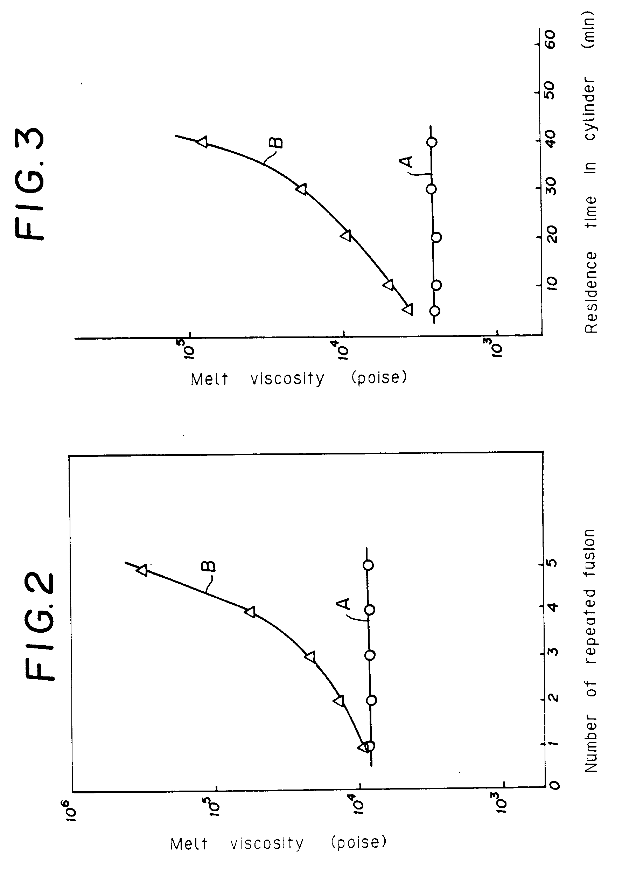

The melt viscosity of the polyimide powder thus obtained was repeatedly measured by using a Japan Polymer Society type flowtester. After holding at 320°C for 5 minutes, the sample was extruded with pressure of 100 kg/cm². The strand obtained was crushed and extruded again. The procedure was continuously repeated 5 times. The relationship between the repeated number and the melt viscosity is illustrated by Curve A in Figure 2. As shown by Curve A, almost no variation in the melt viscosity is observed even though the number of fusions is increased, which indicates good heat stability of the molten polyimide.

### Comparative Example 2

The same procedures as described in Example 2 were carried out without aniline. The polyimide powder obtained was 652 g and had an inherent viscosity of 0.62 dl/g.

The repeated measurement of the melt viscosity was carried out on the polyimide powder thus obtained by the method described in Example 2. The results are illustrated by Curve B in Figure 2. In this case, the melt viscosity increased as the number of fusions increased. The heat stability of the molten polyimide thus obtained was inferior to that obtained in Example 2.

### Example 3

To a reaction vessel equipped with a stirrer, reflux condenser and nitrogen inlet tube, 218 g (1.0 mole) of pyromellitic dianhydride and 3,830 g of N,N-dimethylacetamide were charged and 5.95 g (0.06 mole) of cyclohexylamine was added. The mixture was stirred for about 20 minutes. Then 357 g (0.97 mole) of 4,4'-bis(3-aminophenoxy)biphenyl was added so as not to raise the temperature of the solution and stirred for about 10 hours at room temperature.

To the solution thus obtained, 202 g (2 moles) of triethylamine and 255 g (2.5 moles) of acetic anhydride were added. The reaction mixture was further stirred for 10 hours at room temperature. The resultant light yellow slurry was filtered, washed with methanol and dried at 180°C for 8 hrs under reduced pressure. The light yellow polyimide powder thus obtained was 523 g. The polyimide powder had a glass transition temperature of 252°C, melting point of 378°C in accordance with DSC method and an inherent viscosity of 0.52 dl/g.

The melt viscosity of the polymide was measured at a cylinder temperature of 420°C, a residence time of 5 min and pressure of 100 kg/cm². The melt viscosity was 260 Pa.s (2,600 poises).

The heat stability of the molten polyimide was evaluated by measuring the variation of melt viscosity when the residence time of the molten polyimide is changed in the cylinder of the flow tester. The cylinder temperature was 420°C. The pressure at the measurement was 100 kg/cm². The results are illustrated by Curve A in Figure 3. Almost no variation was found in the melt viscosity even though the residence time was extended, which indicates good heat stability of the molten polyimide.

### Comparative Example 3

The same procedures as described in Example 3 were carried out without cyclohexylamine.

The light yellow polyimide powder thus obtained had a glass transition temperature of 255°C, melting point of 378°C and an inherent viscosity of 0.50 dl/g. The polyimide had a melt viscosity of 380 Pa.s (3,800 poises) at cylinder temperature of 420°C, residence time of 5 minutes and under the pressure of 100 kg/cm².

The heat stability of the molten polyimide was evaluated by measuring the variation of melt viscosity when the residence time of the molten polyimide is changed in the cylinder of the flow tester. The results are illustrated by Curve B in Figure 3. The melt viscosity was increased with the increase of residence time. The heat stability of the molten polyimide thus obtained was inferior to that obtained in Example 3.

### Example 4

To a reaction vessel equipped with a stirrer, reflux condenser and nitrogen inlet tube, 218 g (1.0 mole) of pyromellitic dianhydride and 3,830 g of N,N-dimethylacetamide were charged and 5.58 g (0.06 mole) of aniline was added. The mixture was stirred for about 20 minutes. Then 357 g (0.97 mole) of 4,4'-bis(3-aminophenoxy)biphenyl was added so as not to raise the temperature of the solution and stirred for about 10 hours at room temperature.

To the solution thus obtained, 202 g (2 moles) of triethylamine and 255 g (2.5 moles) of acetic anhydride were added. The reaction mixture was further stirred for 10 hours at room temperature. The resultant light yellow slurry was filtered, washed with methanol and dried at 180°C for 8 hrs under reduced pressure. The light yellow polyimide powder thus obtained was 523 g. The polyimide powder had a glass transition temperature of 255°C, melting point of 378°C and inherent viscosity of 0.52 dl/g.

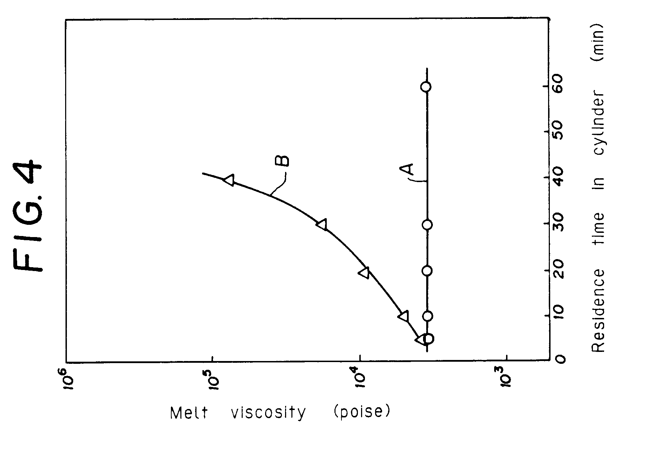

The heat stability of the molten polyimide was evaluated by measuring the variation of melt viscosity when the residence time of the molten polyimide is changed in the cylinder of the flow tester. The cylinder temperature was 420°C. The pressure at the measurement was 100 kg/cm². The results are illustrated by Curve A in Figure 4. Almost no variation was found in the melt viscosity even though the residence time was extended, which indicates good heat stability of the molten polyimide.

### Comparative Example 4

The same procedures as described in Example 4 were carried out without aniline.

The light yellow polyimide powder thus obtained had a glass transition temperature of 255°C, melting point of 378°C and an inherent viscosity of 0.50 dl/g.

The heat stability of the molten polyimide was evaluated by measuring the variation of melt viscosity when the residence time of the molten polyimide is changed in the cylinder of the flow tester. The results are illustrated by Curve B in Figure 4. The melt viscosity was increased with the increase of residence time. The heat stability of the molten polyimide thus obtained was inferior to that obtained in Example 4.

### Example 5

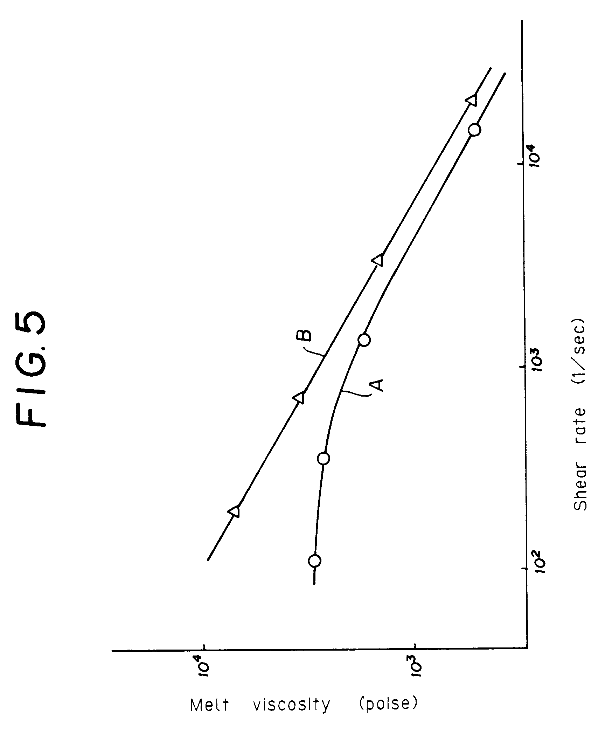

To a reaction vessel equipped with a stirrer, reflux condenser and nitrogen inlet tube, 218 g (1.0 moles) of pyromellitic dianhydride, 393.6 g (0.96 mole) of 2,2-bis[4-(3-aminophenoxy)phenyl]propane, 10.34 g (0.08 mole) of n-octylamine and 3,460 g of m-cresol were charged and gradually heated with stirring in a nitrogen atmosphere. After stirring the reaction mixture for 3 hours at 150°C, the precipitate was filtered, washed with methanol and then acetone, and dried at 180°C for 8 hours under reduced pressure. The polyimide powder thus obtained was 560 g and had an inherent viscosity of 0.56 dl/g, and a glass transition temperature of 228°C. The relationship between the melt viscosity and the shear rate was measured at 360°C. The results obtained are illustrated by Curve A in Figure 5.

### Comparative Example 5

The same procedures as described in Example 5 were carried out without n-octylamine. The polyimide powder thus obtained had an inherent viscosity of 0.56 dl/g.

The relationship between the melt viscosity and the shear rate was measured by the same conditions as in Example 5. The results obtained are illustrated by Curve B in Figure 5.

### Example 6

To a reaction vessel equipped with a stirrer, reflux condenser and nitrogen inlet tube, 218 g (1.0 mole) of pyromellitic dianhydride, 393.6 g (0.96 mole) of 2,2-bis[4-(3-aminophenoxy)phenyl]propane, 7.44 g (0.08 mole) of aniline and 3,460 g of m-cresol were charged and gradually heated with stirring in a nitrogen atmosphere. After stirring the reaction mixture for 3 hours at 150°C, the precipitate was filtered, washed with methanol and then acetone, and dried at 180°C for 8 hours under reduced pressure. The polyimide powder thus obtained was 558 g and had an inherent viscosity of 0.56 dl/g and a glass transition temperature of 231°C.

The repeated extrusion test with the flow tester was carried out at 360°C under the pressure of 100 kg/cm² by using the same conditions as described in Example 2.

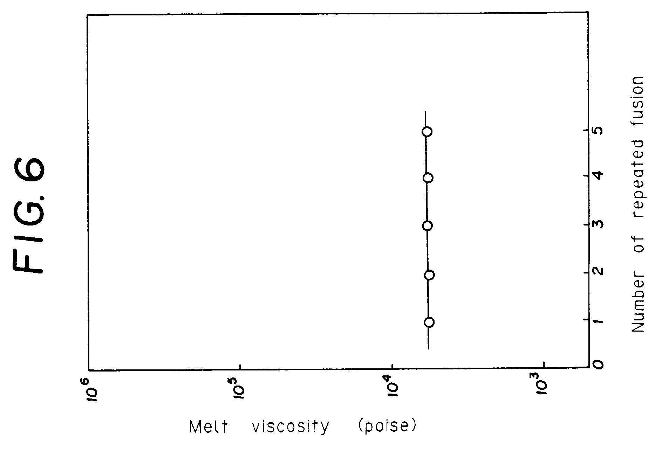

Almost no increase in the melt viscosity of the molten polyimide thus obtained was observed by the repeated extrusion. The results are illustrated in Figure 6.

### Example 7

The polyimide powder was produced from 3,3',4,4'-benzophenonetetracarboxylic dianhydride, bis[4-(3-aminophenoxy)phenyl] sulfide and n-hexylamine according to the procedure of Example 1.

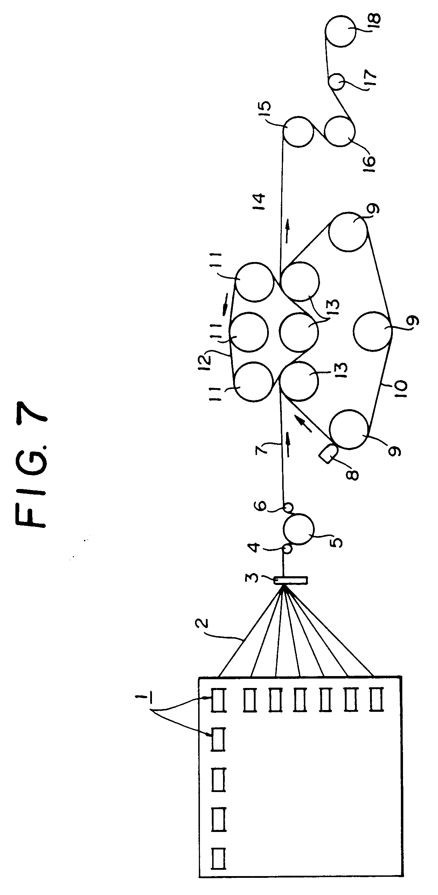

The composite material was manufactured from the polyimide thus obtained and carbon fibers by the following method. Figure 7 illustrates an outline of the equipment used for the production.

Carbon fibers BESFIGHT HTA-7-3K (Trade mark of Toho Rayon Co.) were drawn from 100 bobbins (1), and 100 tows (2) were arranged in parallel to one direction with an aligner (3) and passed through tension adjusting rolls (4, 5, 6) to make a fiber sheet (7) having a width of 150 mm.

Separately, the polyimide powder fused by heating in an extruder (not indicate in Figure 7) was extruded from a die (8) and applied to the surface of a lower belt (10) with a thickness of 70 µm. The lower belt (10) was heated to 350°C by three rolls (9) contacting with the lower belt (10), and the upper belt (12) was also heated to 350°C by three rolls (11) contacting with the upper belt (12). Then the above obtained fiber sheet was sandwiched between the upper and lower belts, and passed through three impregnation rolls (13) at a rate of 20 cm/min under tension of 150 kg. The impregnation rolls (13) had a diameter of 240 mm and were heated to 350°C. The polyimide impregnated carbon fiber composite material (14) thus obtained was cooled, passed through take-up rolls (15, 16, 17) and wound up by the winding shaft (18).

The composite material thus obtained had a width of 150 mm and thickness of 0.13 mm.

Then 20 sheets of the above polyimide composite material were unidirectionally laid up and hot pressed at 340°C for 20 minutes under pressure of 30 kg/cm² to obtain a plate having dimensions of 200 x 200 x 2.5 (thickness) mm. Volume percentage of the fibrous reinforcing material (hereinafter abbreviated as Vf), void ratio, flexural strength and flexural modulus were measured on the plate thus obtained. The plate had a Vf of 60 %, void ratio of 1 % or less, flexural strength of 190 kg/mm² and flexural modulus of 12,100 kg/mm². These results indicated good properties of the plate. Vf and void ratio were calculated from the density and weight percentage of the fibrous reinforcing material of the plate. Flexural strength and flexural modulus were measured in accordance with JIS K 7230.

### Example 8

Polyimide powder was produced from 3,3',4,4'-benzophenonetetracarboxylic dianhydride, bis[4-(3-aminophenoxy)phenyl] sulfide and aniline according to the procedure of Example 2.

The same procedures as described in Example 7 were carried out for the manufacture of the composite material from the polyimide powder thus obtained and carbon fiber.

The operation for the manufacture of the composite material was continued for 5 hours. No change was observed during the operation on the flowability of molten polyimide. The resultant composite material could be smoothly wound up without fiber breakage. The composite material thus obtained had a width of 150 mm and a thickness of 0.13 mm.

Then 20 sheets of the above obtained polyimide composite material were unidirectionally laid up and hot pressed at 340°C for 20 minutes under pressure of 50 kg/cm² to obtain a plate having dimensions of 200 x 200 x 2.5 (thickness) mm. The plate obtained had a Vf of 60 %, void ratio of 1 % or less, flexural strength of 198 kg/mm² and flexural modulus of 12,100 kg/mm². These results indicate that the plate had good properties.

### Comparative Example 6

Polyimide powder was produced from 3,3',4,4'-benzophenonetetracarboxylic dianhydride and bis[4-(3-aminophenoxy)phenyl] sulfide according to the procedure of Comparative Example 2.

The same procedures for the production of the composite material as described in Example 7 were carried out by using the polyimide powder thus obtained. After 30 minutes from the start of the operation, molten polyimide caused gelation and release of fibers from the upper and lower belts became difficult. Finally the operation was stopped. A part of the composite material formed in this operation was molded by the same procedures as described in Example 8 and its physical properties evaluated. The molded plate had a Vf of 60 %, void ratio of 7.2 %, flexural strength of 90 kg/mm² and flexural modulus of 6,100 kg/mm². These extremely low strength and modulus values resulted from the significant decrease in flowability and insufficient defoaming.

### Example 9

Polyimide powder was produced from pyromellitic dianhydride, 4,4'-bis(3-aminophenoxy)biphenyl and cyclohexylamine according to the procedure of Example 3. Composite material was obtained from the polyimide powder obtained and carbon fiber by the same procedures as Example 7 except that the impregnation temperature was changed to 420°C. The manufacturing operation of the composite material was continued for 5 hours. No change was observed during the operation on the flowability of molten polyimide. The composite material thus obtained was hot pressed to give a plate by the same procedures as described in Example 7 except that the temperature was changed to 400°C. The plate obtained had a flexural strength of 184 kg/mm² and a flexural modulus of 11,300 kg/mm².

### Comparative Example 7

Polyimide powder was produced from pyromellitic dianhydride and 4,4'-bis(3-aminophenoxy)biphenyl according to the procedures of Comparative Example 3. Composite material was obtained and molded by the same procedures as described in Example 9. The plate thus obtained had a Vf of 60%, void ratio of 7.3%, flexural strength of 91 kg/mm² and flexural modulus of 5,500 kg/mm². The extremely low strength and modulus shown values resulted from the significant decrease in flowability and insufficient defoaming of polyimide.

### Example 10

Polyimide powder was produced from pyromellitic dianhydride, 4,4'-bis(3-aminophenoxy)biphenyl and aniline according to the procedures of Example 4. Composite material was obtained from the polyimide powder thus obtained by the same procedures as described in Example 7 except that the impregnation temperature was changed to 420°C. The manufacturing operation was continued for 5 hours. No change was observed during the operation on the flowability of molten polyimide. The composite material thus obtained was hot pressed to give a plate by the same procedures as described in Example 8 except that the temperature was changed to 400°C. The plate obtained had a flexural strength of 187 kg/mm² and a flexural modulus of 11,800 kg/mm².

### Examples 11 - 14

Polyimide powder was produced from pyromellitic dianhydride, 4,4'-bis(3-aminophenoxy)biphenyl and cyclohexylamine according to the procedures of Example 3.

Polyimide composite materials were obtained from the resultant polyimide powder by carrying out the same procedures as described in Example 9 except that the kinds of fibrous reinforcing materials and the applied thickness of the molten polyimide to the belt were changed as shown in Table 1. Thus polyimide composite material was obtained. Numbers of the composite material as listed in Table 1 were laid up and processed by the same procedures as described in Example 9. The properties of the plate obtained are shown in Table 1.

### Examples 15 - 16

Polyimide powder was produced from pyromellitic dianhydride, 4,4'-bis(3-aminophenoxy)biphenyl and cyclohexylamine according to the procedures of Example 3.

The same procedures as described in Example 9 were carried out except that the kinds of fibrous reinforcing materials and the applied thickness of the molten polyimide to the belt were changed as shown in Table 1, and the tension was changed to 30 kg. Thus polyimide composite material was obtained. Numbers of composite material as shown in Table 1 were laid up and processed by the same procedures as described in Figure 9. The properties of the plate thus obtained are shown in Table 1.

### Examples 17 - 20

Polyimide powder was produced from pyromellitic dianhydride, 4,4'-bis(3-aminophenoxy)biphenyl and aniline according to the procedures of Example 4.

The same procedures as in Example 10 were carried out except that the kinds of fibrous reinforcing materials and the applied thickness of the molten polyimide to the belt were changed as shown in Table 1. Thus polyimide composite material was obtained. Numbers of composite material as shown in Table 1 were laid up and processed by the same procedures as in Example 10. Properties of the plate thus obtained are shown in Table 1.

### Examples 21 - 22

Polyimide powder was produced from pyromellitic dianhydride, 4,4'-bis(3-aminophenoxy)biphenyl and aniline according to the procedures of Example 4.

The same procedures as Example 10 were carried out except that the kinds of fibrous reinforcing materials and the applied thickness of the molten polyimide to the belt were changed as shown in Table 1, and the tension was changed to 30 kg. Thus polyimide composite material was obtained. Numbers of the composite material as shown in Table 1 were laid up and processed by the same procedures as Example 10. Properties of the plate thus obtained are shown in Table 1.

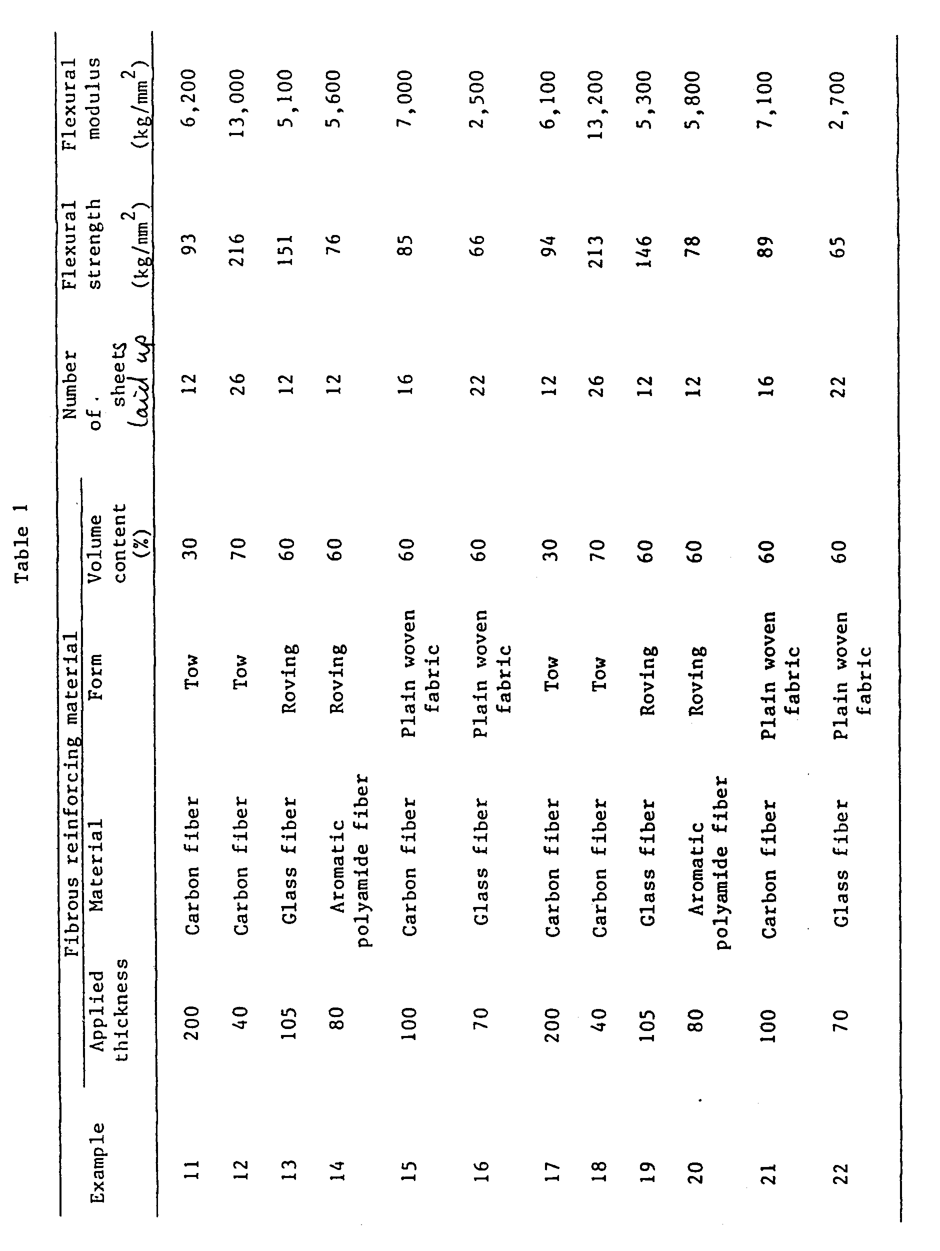

### Example 23

An aluminium frame having inside dimensions of 30 cm x 30 cm and a thickness of 1.0 mm was placed on a heat resistant release film of 50 µm thick, and 5 g of the polyimide powder obtained in Example 3 was uniformly dispersed within the frame. Then the frame was removed, and a carbon fiber fabric BESFIGHT W-3101 (Trade mark of Toho Rayon Co.) was placed on the polyimide powder dispersed above. Another 5 g of the polyimide powder was uniformly dispersed on the above fabric. A commercial heat resistant release film was put on the dispersed polyimide powder and pressed in a metal mold at 400°C for 10 minutes with the pressure of 70 kg/cm². After cooling to 250°C with the same pressure, the molded product was taken out of the mold and the release films were removed.

The composite material thus obtained was divided into 6 portions, laid up and processed by the same procedures as described in Example 9. The resultant plate had a Vf of 60 %, flexural strength of 85 kg/mm² and flexural modulus of 7,100 kg/mm².

### Example 24

The same procedures as described in Example 23 were carried out except that the polyimide powder obtained in Example 4 was used in place of the polyimide powder obtained in Example 3 and the pressure was changed to 50 kg/cm².

The plate thus obtained had a Vf of 60 %, flexural strength of 87 kg/mm² and flexural modulus of 6,900 kg/mm².

### Example 25

Polyimide powder was produced from pyromellitic dianhydride, 2,2-bis[4-(3-aminophenoxy)phenyl]propane and n-octylamine according to the procedures of Example 5.

The polyimide powder produced according to the procedure above was subjected to impregnation process by the same procedures as described in Example 7 except that impregnation temperature was changed to 350°C.

The polyimide composite material thus obtained was hot pressed by the same procedures as Example 7 except that the temperature was changed to 330°C. The plate obtained had a flexural strength of 176 kg/mm² and a flexural modulus of 10,600 kg/mm².

### Example 26

Polyimide powder was produced from pyromellitic dianhydride, 2,2-bis[4-(3-aminophenoxy)phenyl]propane and aniline according to the procedure of Example 6.

The polyimide powder was subjected to impregnation process by the same procedures as described in Example 7 except that impregnation temperature was changed to 350°C. The operation was smoothly continued for 5 hours. No change was observed on the flowability of the molten polyimide resin during the operation. Then the resultant composite material was hot pressed by the same procedures as Example 8 except that the temperature was changed to 330°C. The plate thus obtained had a flexural strength of 181 kg/mm² and flexural modulus of 11,100 kg/mm².

## Claims

1. A method for preparing thermally stable polyimide consisting primarily of recurring units of the formula: 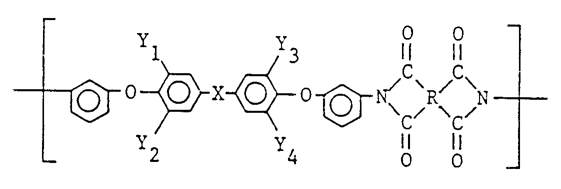 wherein X is a direct bond or a radical selected from a divalent hydrocarbon radical having 1 to 10 carbon atoms, a hexafluorinated isopropylidene radical, a carbonyl radical, a thio radical and a sulfonyl radical; Y₁, Y₂, Y₃ and Y₄ are each independently selected from a hydrogen atom, a lower alkyl radical, a lower alkoxy radical, a chlorine atom and a bromine atom; and R is a tetravalent radical selected from an aliphatic radical having 2 or more carbon atoms, a cyclic aliphatic radical, a monocyclic aromatic radical, a fused polycyclic aromatic radical, and a polycyclic aromatic radical wherein the aromatic radicals are linked to one another directly or via a bridging member,
by the reaction of an aromatic diamine with a tetracarboxylic dianhydride and thermally or chemically imidizing the resultant polyamic acid, wherein:
(a) the aromatic diamine is represented by the formula: 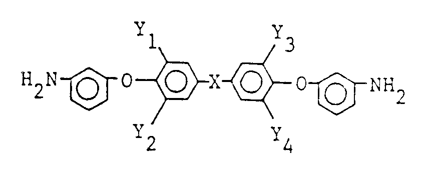 wherein X, Y₁, Y₂, Y₃ and Y₄ are as above defined,
(b) the tetracarboxylic dianhydride is represented by the formula: 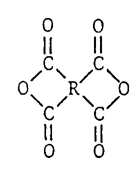 wherein R is as above defined,
(c) the reaction is carried out in the presence of monoamine represented by the formula:
Z-NH₂
wherein Z is a monovalent radical selected from an aliphatic radical, a cyclic aliphatic radical, a monocyclic aromatic radical, a fused polycyclic aromatic radical, and a polycyclic aromatic radical wherein the aromatic radicals are linked to one another directly or via a bridging member, and
(d) the amount of the aromatic diamine is from 0.9 to 1.0 mole per mole of the tetracarboxylic dianhydride and the amount of the monoamine is from 0.001 to 1.0 mole per mole of the tetracarboxylic dianhydride.

2. A method as claimed in claim 1, wherein the aromatic diamine is selected from:
4,4'-bis(3-aminophenoxy)biphenyl, 2,2-bis[4-(3-aminophenoxy)phenyl]propane, bis[4-(3-aminophenoxy)phenyl] ketone, bis[4-(3-aminophenoxy)phenyl] sulfide and bis[4-(3-aminophenoxy)phenyl] sulfone.

3. A method as claimed in claim 1 or claim 2, wherein the tetracarboxylic dianhydride is selected from pyromellitic dianhydride, 3,3',4,4'-benzophenonetetracarboxylic dianhydride, 3,3',4,4'-biphenyltetracarboxylic dianhyride, bis(3,4-dicarboxyphenyl) ether diandhydride, and 4,4'-(p-phenylenedioxy)diphthalic dianhydride.

4. A method as claimed in any preceding claim, wherein the monoamine is selected from n-propylamine, n-butylamine, n-hexylamine, n-octylamine, cyclohexylamine, aniline, 4-aminobiphenyl, 4-aminophenyl phenyl ether, 4-aminobenzophenone, 4-aminophenyl phenyl sulfide and 4-aminophenyl phenyl sulfone.

5. A method as claimed in any preceding claim, wherein the amount of monoamine is 0.01 to 0.5 mole per mole of the tetracarboxylic dianhydride.

6. A method as claimed in any preceding claim, wherein the reaction is carried out so as to simultaneously form said polyamic acid and thermally imidize said acid to produce polyimide.

7. A polyimide composite material comprising a fibrous reinforcing material and a polyimide prepared by a method according to any preceding claim.

8. A polyimide composite material as claimed in Claim 7, wherein the fibrous reinforcing material is a unidirectional long fiber, bundled unidirectional long fiber or multidirectional continuous fiber selected from glass fiber, carbon fiber, aromatic polyamide fiber, metal fiber, alumina fiber and boron fiber.

9. A polyimide composite material as claimed in Claim 6 or Claim 7, wherein the fibrous reinforcing material is present in an amount of from 30% to 70% by volume of the composite material.

## Patentansprüche

1. Verfahren zur Herstellung eines thermisch stabilen Polyimids, das wiederkehrende Einheiten der Formel aufweist: 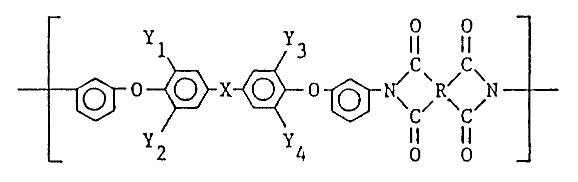 worin X eine direkte Bindung oder ein Radikal ist, welches aus einem zweiwertigen Kohlenwasserstoffradikal mit 1 bis 10 Kohlenstoffatomen, einem hexafluorinierten Isopropylidenradikal, einem Carbonylradikal, einem Thioradikal und einem Sulfonylradikal ausgewählt wird, Y₁, Y₂, Y₃ und Y₄ jeweils unabhängig aus einem Wasserstoffatom, einem niederen Alkylradikal, einem niederen Alkoxyradikal, einem Chloratom und einem Bromatom ausgewählt werden; und R ein vierwertiges Radikal ist, welches aus einem aliphatischen Radikal mit zwei oder mehr Kohlenstoffatomen, einem zykloaliphatischen Radikal, einem monozyklischen aromatischen Radikal, einem kondensierten polyzyklischen aromatischen Radikal und einem polyzyklischen aromatischen Radikal, bei dem die aromatischen Radikale miteinander durch direkte Bindung oder über eine überbrückungsgruppe verbunden sind, ausgewählt wird,
durch die Reaktion eines aromatischen Diamins mit einem Tetracarboxyldianhydrid und thermische oder chemische Imidisierung der resultierenden polyamischen Säure, wobei:
(a) das aromatische Diamin dargestellt wird durch die Formel: 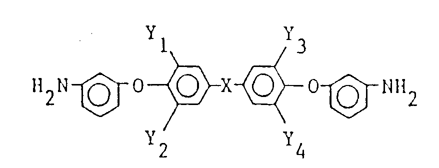 worin X, Y₁, Y₂, Y₃ und Y₄ wie oben definiert sind,
(b) das Tetracarboxylanhydrid dargestellt wird durch die Formel: 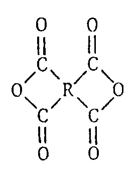 worin R wie oben definiert ist,
(c) die Reaktion in Gegenwart von Monoamin ausgeführt wird, das dargestellt wird durch die Formel:
Z - NH₂
worin Z ein einwertiges Radikal ist, welches aus einem aliphatischen Radikal, einem zykloaliphatischen Radikal, einem monozyklischen aromatischen Radikal, einem kondensierten polyzyklischen aromatischen Radikal und einem polyzyklischen aromatischen Radikal, bei dem die aromatischen Radikale miteinander durch direkte Bindung oder über eine überbrückungsgruppe verbunden sind, ausgewählt wird,
(d) die Menge des aromatischen Diamins zwischen 0,9 und 1,0 Mol pro Mol Tetracarboxyldianhydrid und die Menge des Monoamins zwischen 0,001 und 1,0 Mol pro Mol Tetracarboxyldianhydrid ist.

2. Verfahren nach Anspruch 1, wobei das aromatische Diamin aus:
4,4'-bis-(3-Aminophenoxy)biphenyl, 2,2'-bis-[4-(3-Aminophenoxy)phenyl]propan, bis-[4(3-Aminophenoxy)phenyl]keton, bis-[4(3-Aminophenoxy)phenyl]sulfid und bis-[4(3-Aminophenoxy)phenyl]sulfon ausgewählt wird.

3. Verfahren nach Anspruch 1 oder 2, wobei das Tetracarboxyldianhydrid aus pyromellitischem Dianhydrid, 3,3',4,4'-Benzophenontetracarboxyldianhydrid, 3,3'4,4'-Biphenyltetracarboxyldianhydrid, bis(3,4-Dicarboxyphenyl)etherdianhydrid und 4,4'-(p-Phenylendioxy)diphthaldianhydrid ausgewählt wird.

4. Verfahren nach einem der vorhergehenden Ansprüche, wobei das Monoamin aus n-Propylamin, n-Butylamin, n-Hexylamin, n-Octylamin, Cyclohexylamin, Anilin, 4-Aminobiphenyl, 4-Aminophenylphenylether, 4-Aminobenzophenon, 4-Aminophenylphenylsulfid und 4-Aminophenylphenylsulfon ausgewählt wird.

5. Verfahren nach einem der vorhergehenden Ansprüche, wobei die Menge des Monoamins zwischen 0,01 und 0,5 Mol pro Mol Tetracarboxyldianhydrid ist.

6. Verfahren nach einem der vorhergehenden Ansprüche, wobei die Reaktion so ausgeführt wird, daß gleichzeitig besagte polyamische Säure gebildet und diese Säure imidisiert wird, um Polyimid zu erzeugen.

7. Polyimides Verbundmaterial, aufweisend ein faserförmiges Verstärkungsmaterial und ein durch ein Verfahren nach einem der vorhergehenden Ansprüche hergestelltes Polyimid.

8. Polyimides Verbundmaterial nach Anspruch 7, wobei das faserförmige Verstärkungsmaterial eine in einer Richtung orientierte, lange Faser, eine gebündelte, in einer Richtung orientierte, lange Faser oder eine in mehreren Richtung orientierte, durchgehende Faser ist, ausgewählt aus Glasfaser, Kohlefaser, aromatische Polyamidfaser, Metallfaser, Tonerdefaser und Borfaser.

9. Polyimides Verbundmaterial nach Anspruch 6 oder 7, wobei das faserförmige Verstärkungsmaterial in einer Menge von 30 bis 70 Vol.-% des Verbundmaterials vorliegt.

## Revendications

1. Un procédé de préparation de polyimides stable à la chaleur se composant essentiellement de motifs récurrents de formule: 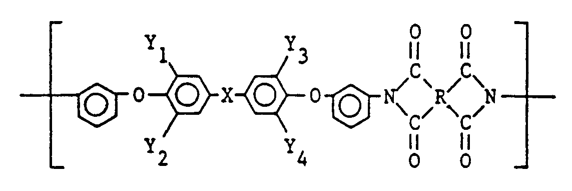 dans laquelle X est une liaison directe ou un radical choisi parmi un radical hydrocarboné divalent possédant de 1 à 10 atomes de carbone, un radical isopropylidène hexafluoré, un radical carbonyle, un radical thio, un radical sulfonyle; Y₁, Y₂, Y₃ et Y₄ sont chacun choisi indépendamment les uns des autres parmi un atome d'hydrogène, un radical alkyle inférieur, un radical alcoxy inférieur, un atome de chlore et un atome de brome; et R est un radical tétravalent choisi parmi un radical aliphatique possédant au moins deux atomes de carbone, un radical aliphatique cyclique, un radical aromatique monocyclique, un radical aromatique polycyclique condensé, et un radical aromatique polycyclique, les radicaux aromatiques étant liés les un aux autres directement ou par un groupe de pontage,
par la réaction d'une diamine aromatique avec un dianhydride tétracarboxylique et une imidisation thermique ou chimique de l'acide polyamique obtenu, dans lequel:
(a) la diamine aromatique est représentée par la formule: 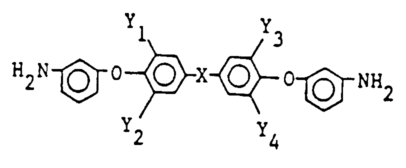 dans laquelle X, Y₁, Y₂, Y₃ et Y₄ sont définis comme ci-dessus.
(b) le dianhydride tétracarboxylique est représenté par la formule: 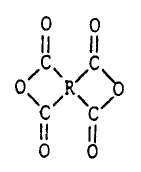 dans laquelle R est défini comme ci-dessus.
(c) la réaction est réalisée en présence d'une monoamine représentée par la formule:
Z-NH₂
dans laquelle Z est un radical monovalent choisi parmi un radical aliphatique, un radical aliphatique cyclique, un radical aromatique monocyclique, un radical aromatique polycyclique condensé, et un radical aromatique polycyclique, les radicaux aromatiques étant liés les uns aux autres directement ou par un groupe de pontage, et
(d) la quantité de diamine aromatique va de 0,9 à 1,0 mole par mole de dianhydride tétracarboxylique , et la quantité de monoamine va de 0,001 à 1,0 mole par mole de dianhydride tétracarboxylique.

2. Un procédé tel que revendiqué dans la revendication 1, dans lequel la diamine aromatique est choisie dans le groupe formé par:
le 4,4'-bis(3-aminophénoxy)biphényle,
le 2,2-bis[4-(3-aminophénoxy)phényl]propane,
la bis[4-(3-aminophénoxy)phényl]cétone,
le sulfure de bis[4-(3-aminophénoxy)phényl], et
la bis[4-(3-aminophénoxy)phényl]sulfone.

3. Un procédé tel que revendiqué dans les revendications 1 ou 2, dans lequel le dianhydride tétracarboxylique est choisi parmi le dianhydride pyromellitique, le dianhydride de 3,3',4,4'-benzophénone tétracarboxylique, le dianhydride 3,3',4,4'-biphényle tétracarboxylique, le dianhydride d'éther bis(3,4-dicarboxyphényle), et le dianhydride diphtalique 4,4'-(p-phénylène-dioxy).

4. Un procédé tel que revendiqué dans l'une quelconque des revendications précédentes, dans lequel la monoamine est choisie parmi la n-propylamine, la n-butylamine, la n-héxylamine, la n-octylamine, la cyctohéxamine, l'aniline, le 4-amniobiphényle, l'éther 4-aminophényle phényle, la 4-amino-benzophénone, le sulfure 4-aminophényle phényle et la sulfone 4-aminophényle phényle.

5. Un procédé tel que revendiqué dans l'une quelconque des revendications précédentes, dans lequel la quantité de monoamine va de 0,01 à 0,5 mole par mole de dianhydride tétracarboxylique.

6. Un procédé tel que revendiqué dans l'une quelconque des revendications précédentes, dans lequel la réaction est réalisée de façon à simultanément former l'acide polyamique et imidiser cet acide par voie thermique pour donner le polyimide.

7. Matériau composite polyimide comprenant une matière fibreuse de renforcement et un polyimide préparé par un procédé selon l'une quelconque des revendications précédentes.

8. Un matériau composite polyimide tel que revendiqué dans la revendication 7, dans lequel la matière fibreuse de renforcement est une fibre longue unidirectionnelle, une fibre longue unidirectionnelle en faisceau, ou une fibre continue multidirectionnelle choisie parmi la fibre de verre, la fibre de carbone, une fibre polyamide aromatique, une fibre métallique, une fibre d'alumine et une fibre de bore.

9. Matériau composite polyimide tel que revendiqué dans les revendications 6 ou 7, dans lequel la matière fibreuse de renforcement est présente à raison de 30 à 70% en volume du matériau composite.
